# EUROPÄISCHE PATENTSCHRIFT

(11) **EP 1 762 817 B1**
(45) Veröffentlichungstag und Bekanntmachung des Hinweises auf die Patenterteilung: **18.03.2009**
(21) Anmeldenummer: 06011574.8
(22) Anmeldetag: 03.06.2006
(51) Int. Cl.: G01B 5/016

(54) **Tastkopf**
Scanning head
Tête de palpage

(30) Priorität: 08.09.2005 DE 102005042558
(43) Veröffentlichungstag der Anmeldung: 14.03.2007
(73) Patentinhaber: Dr. Johannes Heidenhain GmbH, 83301 Traunreut (DE)
(72) Erfinder: Schopf, Reinhold, 83308 Trostberg (DE)

(56) Entgegenhaltungen:
- DE-A1- 3 016 782
- US-A- 5 327 657
- US-A- 5 345 690

## Beschreibung

Die Erfindung betrifft einen Tastkopf, mit druckempfindlichen Sensoren, gemäß dem Anspruch 1.

Ein Tastsystem umfasst in der Regel einen mobilen Tastkopf und ein stationäres Teil. Ein derartiger Tastkopf wird häufig in Form eines Tastschalters bzw. eines schaltenden Tasters mit einem auslenkbaren Tastelement eingesetzt, der bei einer Auslenkung aus dessen Ruheposition ein Schaltsignal abgibt. Derartige Tastköpfe werden insbesondere zur Positionsbestimmung von Werkstücken verwendet. Vorzugsweise sind diese in materialbearbeitenden Maschinen, beispielsweise Werkzeugmaschinen, eingespannt. Unter der Ruheposition des Tastelements bzw. eines Taststifts wird dabei eine Position verstanden, in welcher der Taststift keinen Kontakt mit dem anzutastenden Werkstück hat. Bei einem Kontakt des Taststifts mit dem Werkstück wird das Tastelement aus seiner Ruheposition, wenn auch nur minimal, ausgelenkt und es wird mittels eines geeigneten Wandlers ein elektrisches Signal erzeugt, wenn die Auslenkung bzw. die auf Sensoren im Tastkopf ausgeübte Kraft eine vorgegebene Schwelle überschreitet. Das elektrische Signal wird dann häufig in ein Infrarot-Signal umgewandelt, so dass auf diese Weise eine berührungs- und kabellose Signalübertragung an das stationäre Teil des Tastsystems erreicht wird.

Die Patentschrift US 5345690 offenbart einen Tastkopf mit einem Flansch als Anschlag zum mechanischen Schutz einer Leiterplatte, auf der Dehnundssensoren angeordnet sind.

Aus der EP 0423307 B1 ist ein Tastkopf der eingangs genannten Art bekannt, bei dem Arme eines Tastelements bzw. Stifthalters beim Antasten Verformungen in so genannten Sitzelementen hervorrufen, wobei die Verformungen gemessen werden und entsprechende Antastsignale auslösen können. Die Sitzelemente sind dabei paarweise gegenüberliegend schräg oder gewölbt ausgestaltet. Eine derartige Anordnung hat mehrere Nachteile. Zum Beispiel können bei großen Auslenkungen des Tastelements einzelne Sensoren überlastet bzw. zerstört werden, insbesondere dann, wenn hochempfindliche Sensoren eingesetzt werden.

Der Erfindung liegt daher die Aufgabe zu Grunde, einen Tastkopf der eingangs genannten Art zu schaffen, in welchem überaus empfindliche Sensoren für ein exaktes Antastverhalten eingesetzt werden können und welcher dennoch robust ist.

Diese Aufgabe wird erfindungsgemäß durch die Merkmale des Anspruches 1 gelöst.

Gemäß der Erfindung umfasst der Tastkopf ein fest stehendes Bauteil sowie Sensoren mit jeweils einer druckempfindlichen Oberfläche, wobei durch die Sensoren bei Einwirken von Druckkräften, die eine Richtungskomponente orthogonal zur druckempfindlichen Oberfläche aufweisen, elektrische Signale erzeugbar sind. Die Sensoren sind relativ zum fest stehenden Bauteil ortsfest angeordnet. Ferner umfasst der Tastkopf ein Tastelement, welches relativ zum fest stehenden Bauteil auslenkbar ist, wobei das Tastelement eine Längsachse, einen ersten Kontaktpunkt und einem zweiten Kontaktpunkt aufweist. Durch Berühren des Tastelements bzw. durch Abtasten sind Druckkräfte über den ersten Kontaktpunkt des Tastelements in die Sensoren mittelbar über ein Übertragungselement oder unmittelbar - indem der erste Kontaktpunkt die Oberfläche des Sensors berührt - einleitbar. Entsprechend ist dann eine Pegeländerung des elektrischen Signals von zumindest einem der Sensoren erzeugbar. Bei weiterer Auslenkung des Tastelements ist dieses in eine Anschlagposition überführbar, in welcher der zweite Kontaktpunkt des Tastelements das fest stehende Bauteil abstützend berührt. Das Tastelement ist derart ausgestaltet, dass in der Anschlagposition die in die Sensoren einleitbaren Druckkräfte zum Schutz der Sensoren begrenzt sind, wobei ein erster Abstand zwischen dem ersten Kontaktpunkt und der Längsachse kleiner ist als ein zweiter Abstand zwischen dem zweiten Kontaktpunkt und der Längsachse. Weiterhin weist das Tastelement mehrere Arme auf, wobei an jedem der Arme sowohl ein erster Kontaktpunkt und ein zweiter Kontaktpunkt vorgesehen sind. Dabei kann mit Vorteil der zweite Kontaktpunkt an einem Absatz des Tastelements angeordnet sein.

Als erster Kontaktpunkt ist ein Punkt zu verstehen, welcher auf dem Tastelement liegt und welcher gleichzeitig mit einem Übertragungselement oder der Oberfläche eines Sensors in Kontakt ist. Dabei können in einem Tastkopf in der Regel mehrere derartige erste Kontaktpunkte vorliegen. Über einen ersten Kontaktpunkt werden also Druckkräfte bei Berühren des Tastelements mittelbar oder unmittelbar in einen Sensor eingeleitet.

Als zweiter Kontaktpunkt ist ein Punkt zu verstehen, welcher ebenfalls auf dem Tastelement liegt und welcher zum Abstützen des Tastelements gegenüber einem fest stehenden Bauteil zum Schutz der Sensoren dient. Auch hier ist es möglich, dass mehrere derartige zweite Kontaktpunkte in einem Tastkopf vorliegen. Abhängig von der Antastrichtung kann die Position der zweiten Kontaktpunkte unterschiedlich sein, stets liegt jedoch ein derartiger zweiter Kontaktpunkt von der Längsachse des Tastelements weiter beabstandet als der dazugehörige erste Kontaktpunkt

Mit Vorteil ist der Tastkopf derart ausgestaltet, dass der erste Kontaktpunkt des Tastelements in einer Ruheposition in Kontakt mit einem Übertragungselement ist, welches wiederum die druckempfindliche Oberfläche eines der Sensoren berührt. Das Tastelement, die Übertragungselemente und die Sensoren sind also so angeordnet, dass sich diese berühren, so dass vom Tastelement eingeleitete Druckkräfte über die Übertragungselemente in die Sensoren geleitet werden. In einer Ausgestaltung der Erfindung liegt ein Übertragungselement geometrisch zwischen jeweils einem Arm des Tastelements und einem Sensor, wobei das Übertragungselement in einer Ruhe-und 1 oder einer Auslenkposition des Tastelements sowohl dem jeweiligen Arm des Tastelements als auch den jeweiligen Sensor berührt.

Mit Vorteil ist der Tastkopf, so ausgestaltet, dass die Druckkräfte im Wesentlichen senkrecht zur Oberfläche der Sensoren gerichtet sind.

Mit Vorteil sind diejenigen Flächen der Übertragungselemente abgerundet ausgestaltet, welche die ,druckempfindlichen Oberfläche der Sensoren' oder die Tastelemente berühren. In vorteilhafter Ausgestaltung der Erfindung sind die Übertragungselemente als Kugeln ausgestaltet.

Gemäß einer bevorzugten Ausgestaltung der Erfindung weist der Tastkopf ein Halterungselement auf, das im Wesentlichen zur Positionierung der Übertragungselemente bezüglich der Sensoren dient, und welches relativ zu den Sensoren ortsfest festgelegt ist. Das Halterungselement ist derart konfiguriert, dass die Übertragungselemente in einer Richtung, die eine Richtungskomponente orthogonal zur Oberfläche der Sensoren aufweist, relativ zu den Sensoren beweglich sind. In einer bevorzugten Ausgestaltung der Erfindung ist das Halterungselement, das ein separates bzw. diskretes Bauteil ist, punktsymmetrisch ausgestaltet. Dies hat insbesondere den Vorteil, dass eine gleichmäßige und richtungsunabhängige Schaltcharakteristik des Tastkopfes erreicht wird.

In weiterer Ausgestaltung der Erfindung ist der Tastkopf so konfiguriert, dass zumindest ein Übertragungselement in der Ruheposition des Tastelements zumindest einen der Sensoren berührt.

Das Halterungselement ermöglicht nicht nur die exakte Positionierung der Übertragungselemente relativ zu den Sensoren, sondern gewährleistet gleichzeitig eine definierte Vorspannung bzw. Druckkraft auf die Sensoren, auch wenn sich beispielsweise ein Arm des Tastelements vom Übertragungselement abgehoben hat, so dass auch in diesem Zustand durch die spezielle Ausgestaltung des Halterungselements ein Berührkontakt zwischen Übertragungselement und Tastelement vorherrscht. Gerade bei hochempfindlichen Sensoren hat dies den Verteil, dass deren druckempfindliche Oberfläche weniger Verschleiß bzw. Belastungen ausgesetzt ist.

In weiterer Ausgestaltung der Erfindung ist der Tastkopf so konstruiert, dass die Sensoren in einer Ebene liegen, welche senkrecht zur Längsachse des Tastelements, bzw. des Taststiftes angeordnet ist. Dabei werden häufig drei um 120° versetzt angeordnete Sensoren verwendet, die sich jeweils im gleichen Abstand zur Längsachse des Tastelements befinden.

Besonders vorteilhaft ist die Erfindung, wenn die Sensoren piezoresistive Siliziumchips umfassen, denn gerade derart hochempfindliche und hochgenaue Sensoren werden bei übermäßiger Druckkraftbelastung leicht beschädigt oder zerstört.

Im Übrigen ist anzumerken, dass insbesondere bei der Verwendung druckempfindlicher Sensoren in der Regel extrem kleine Auslenkbewegungen zu einem Schalten des Tastkopfes führen. Entsprechend weicht üblicherweise hier die Ruheposition von der Auslenkposition kaum ab. Gleichwohl kann hier das Tastelement als auslenkbar gegenüber den Sensoren bezeichnet werden, weil das Tastelement gegenüber den Sensoren beweglich gelagert ist.

In weiterer Ausgestaltung der Erfindung ist der Tastkopf, insbesondere dessen Tastelement, so konfiguriert, dass der erste Kontaktpunkt und der zweite Kontaktpunkt bezogen auf die Längsachse des Tastelements axial versetzt angeordnet sind. Insbesondere kann der zweite Kontaktpunkt vom Taststiftende weiter beabstandet sein als der erste Kontaktpunkt, wenn das Tastelement einen Taststift umfasst. Alternativ dazu kann aber auch der Tastkopf so ausgestaltet sein, dass das fest stehende Bauteil, insbesondere eine entsprechende Anschlagfläche des fest stehenden Bauteils, bezogen auf die Längsachse des Tastelements in der Ruheposition axial versetzt zum ersten Kontaktpunkt angeordnet ist.

Vorteilhafte Ausbildungen der Erfindung entnimmt man den abhängigen Ansprüchen.

Weitere Einzelheiten und Vorteile des erfindungsgemäßen Tastkopfes ergeben sich aus der nachfolgenden Beschreibung eines Ausführungsbeispieles anhand der beiliegenden Figuren.

Es zeigen die
- Figur 1: eine perspektivische Ansicht eines Tastkopfs,
- Figur 2: eine perspektivische Ansicht einer Messeinrichtung im Tastkopf,
- Figur 3: eine Teilschnittdarstellung des Tastkopfes,
- Figur 4: eine Detailansicht der Messeinrichtung des Tastkopfes,
- Figur 5: eine Ansicht einer Messeinrichtung im Tastkopf in einer Anschlagposition,
- Figur 6: eine Detailansicht der Messeinrichtung des Tastkopfes in der Anschlagposition,
- Figur 7: eine Detailansicht des Stifthalters,
- Figur 8: eine Draufsicht auf den Stifthalter.

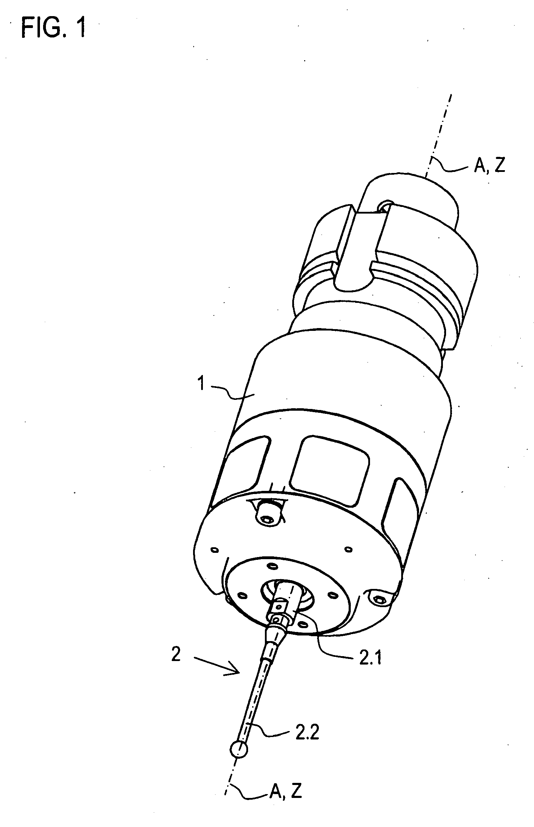

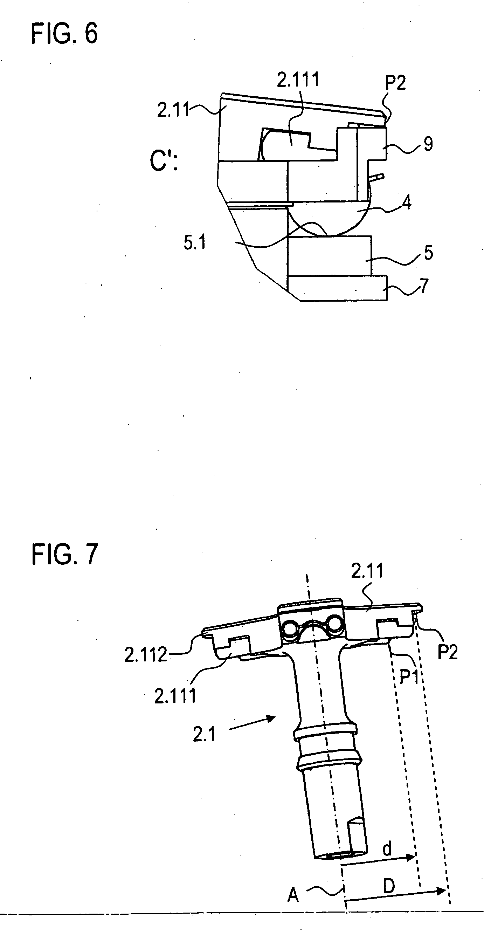

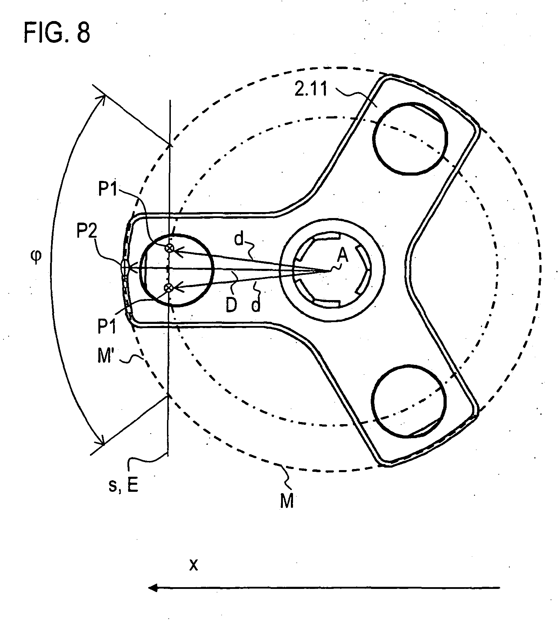

In der Figur 1 ein Tastkopf in einer perspektivischen Außenansicht gezeigt. Der Tastkopf umfasst demnach ein Gehäuse 1, aus dem ein Tastelement 2 ragt. Das Tastelement 2 weist eine Längsachse A auf, welche im Ruhezustand bzw. in der Ruheposition gleichzeitig die Längsachse Z des Gehäuses 1 darstellt. Im vorgestellten Ausführungsbeispiel umfasst das Tastelement 2 zwei Teile, nämlich einen Stifthalter 2.1 und einen Taststift 2.2, mit einer Antastkugel als Taststiftende (in der Figur 1 unten). Der Taststift 2.2 weist ferner eine Sollbruchstelle auf. Stifthalter 2.1 und Taststift 2.2 sind durch eine Schraubverbindung lösbar miteinander verbunden. Der Stifthalter 2.1 des Tastelements 2 weist an einem Ende drei um 120° versetzt angeordnete Arme 2.11 auf (siehe die Figuren 7, 8). An der Unterseite eines jeden Armes 2.11 sind zwei parallele zylindrische Körper 2.111 angebracht. An den radial äußeren Enden der Arme 2.11 befindet sich jeweils ein Absatz 2.112.

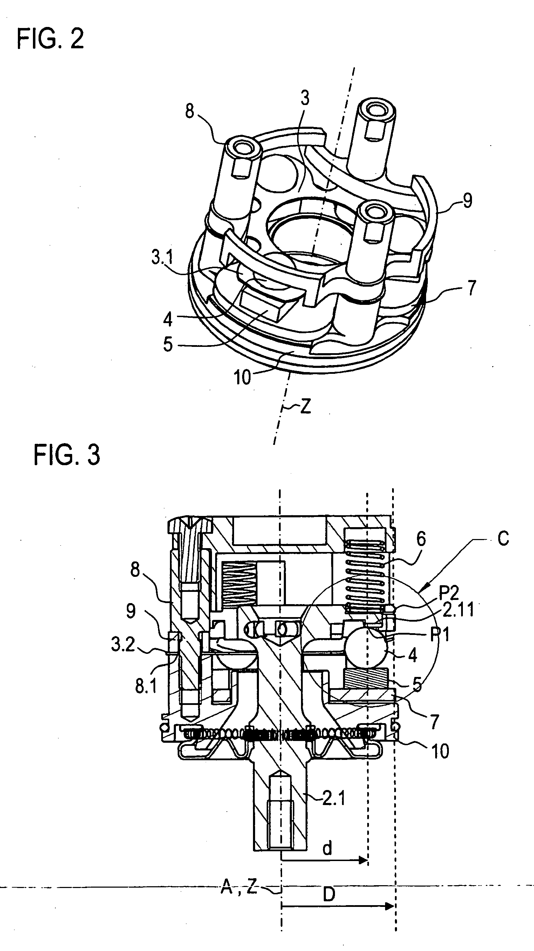

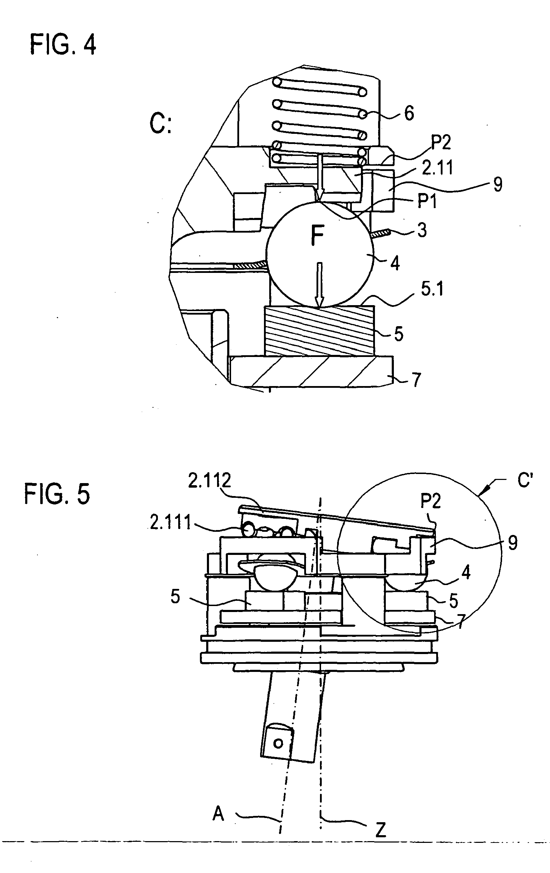

In der Figur 2 ist eine Messeinrichtung, wie sie sich im inneren des Gehäuses 1 befindet gezeigt. Auf einem im Wesentlichen scheibenförmigen Basiskörper 10 befindet sich eine Leiterplatte 7, auf der drei Sensoren 5 montiert sind. Im vorgestellten Ausführungsbeispiel werden als Sensoren 5 Drucksensorelemente verwendet, welche auf piezoresistiven Siliziumchips basieren. Diese Sensoren 5 weisen eine druckempfindliche Oberfläche 5.1 (Figur 4) auf, an der sich hier pn-isolierte Brückenwiderstände befinden. Im Betrieb des Tastkopfes wird eine Speisespannung zur Versorgung der Sensoren 5 über die Leiterplatte 7 eingeleitet. Ferner umfasst der Tastkopf als ein fest stehendes Bauteil einen gegenüber den Sensoren 5 ortsfesten Ringkörper 9.

Auf der Oberfläche 5.1 eines jeden Sensors 5 ruhen Kugeln 4, welche als mechanische Übertragungselemente dienen. Damit die Kugeln 4 jederzeit exakt relativ zu den Sensoren 5 positioniert sind, ist ein Halterungselement 3 vorgesehen, welches bezüglich der Sensoren 5 am Ringkörper 9 ortsfest festgelegt ist.

In der Figur 3 ist eine Schnittdarstellung durch den Tastkopf in einer Ruheposition gezeigt. Demnach weist der Tastkopf die Leiterplatte 7 mit den darauf montierten Sensoren 5 auf, wobei die Leiterplatte 7 passgenau auf dem Basiskörper 10 fixiert ist. Der Stifthalter 2.1 des Tastelements 2 ruht zentral im Gehäuse 1 des Tastkopfes. Entsprechend liegen die Längsachse A des Tastelements 2 und eine Achse Z des Ringkörpers 9 bzw. des Gehäuses 1 in dieser Ruheposition kongruent übereinander. Vorgespannt durch Federn 6 ruhen die Arme 2.11 des Stifthalters 2.1, im Besonderen die zylindrischen Körper 2.111, auf den Kugeln 4. Dabei berührt ein Paar der zylindrischen Körper 2.111, deren Abstand kleiner ist als der Durchmesser Kugeln 4, jeweils die entsprechende Kugel 4 an ersten Kontaktpunkten P1. Der durch die Federn 6 vorgespannte Stifthalter 2.1 ist relativ zum Gehäuse 1 bzw. zum Ringkörper 9 beweglich gelagert und damit auch relativ zu den Sensoren 5 beweglich, bzw.auslenkbar.

Anhand der Figur 8, die eine Draufsicht auf den Stifthalter 2.1 zeigt, kann die besondere Funktionsweise des Tastkopfes erläutert werden. Beispielsweise wird der Tastkopf innerhalb des Bearbeitungsraumes einer Werkzeugmaschine in Richtung x verfahren. In der Ruheposition des Tastelements 2, wenn also der Taststift 2.2 bzw. dessen Antastkugel keinen Kontakt zu einem Hindernis - insbesondere Werkstück - hat, wird entsprechend der Vorspannung der Federn 6 eine definierte Druckkraft jeweils in die Sensoren 5 eingeleitet.

Sobald die Antastkugel am Taststift 2.2 ein Hindernis - etwa ein zu vermessendes Werkstück - berührt, werden Druckkräfte F bzw. veränderte Druckkräfte F über die ersten Kontaktpunkte P1 zunächst in die zugehörige Kugel 4 eingeleitet, welche dann entsprechende Druckkräfte F an den zugeordneten Sensor 5 weiterleitet (Figur 4). Dabei misst derjenige Sensor 5, welcher dem in der Figur 8 linken Arm 2.11 zugeordnet ist eine Druckkrafterhöhung, während die beiden anderen Arme 2.11 eine Druckkraftreduzierung erfahren. Die Sensoren 5 erzeugen jeweils eine entsprechende Pegeländerung in ihren elektrischen Signalen. Die Signale werden weiterverarbeitet und bei Erfüllung vorgegebener Kriterien wird ein Schaltsignal erzeugt. Die Auslenk- bzw. Schaltposition ist erreicht, bevor einer der Arme 2.11 des Tastelements 2 den mechanischen Kontakt an den ersten Kontaktpunkten P1 zu der entsprechenden Kugel 4 verliert. Dadurch wird verhindert, dass eine richtungsabhängige Schaltcharakteristik entsteht. Die entsprechenden Schaltsignale werden schließlich in elektromagnetische Signale umgewandelt, welche zu einer ortsfesten Empfängerstation gesendet werden. Die ortsfeste Empfängerstation ist an einem unbeweglichen Bauteil beispielsweise der Werkzeugmaschine fixiert. Von dieser ortsfesten Empfängerstation wird das empfangene Signal an eine Elektronik, etwa in der Steuerung der Werkzeugmaschine weitergeleitet, wo die Position der Antastkugel bestimmt wird, und gleichzeitig die Maschine angehalten wird.

Aus verschiedensten Gründen kann es aber sein, dass dieser Stopp nicht, oder verspätet ausgelöst wird. Trotz der Sollbruchstelle im Taststift 2.2 kann bei der Verwendung von empfindlichen Sensoren 5 nicht sichergestellt werden, dass diese bei weiterer Auslenkung des Tastelements 2 unversehrt bleiben. Für diesen Fall der weiteren Auslenkung ist an jedem Arm 2.11 der Absatz 2.112 als mechanischer Anschlag vorgesehen. Wenn nun, wie in der Figur 5 dargestellt, eine übermäßige Auslenkung des Tastelements 2 erfolgt, so wird das Tastelement 2 in eine Anschlagposition überführt. In dieser Position sind die Längsachse A des Tastelements 2 und die Achse Z des Ringkörpers 9 bzw. des Gehäuses 1 zueinander geneigt. Ferner berührt nun der Absatz 1.112 den Ringkörper 9 an einem zweiten Kontaktpunkt P2 des Tastelements 2. Dadurch wird eine abstützende Wirkung erreicht, und der entsprechende Sensor 5 wird nicht weiter mechanisch belastet bzw. dessen Belastung wird begrenzt. Durch die geometrische Ausgestaltung des Tastelements 2 werden sogar die Druckkräfte auf die Sensoren 5 durch Abheben der Arme 2.11 von den Kugeln 4 in der Anschlagposition wieder reduziert. Die entsprechenden Kräfte werden nämlich vom Ringkörper 9 abgeleitet.

Erreicht wird dieses Verhalten durch eine spezielle relative Anordnung der ersten Kontaktpunkte P1 und der zweiten Kontaktpunkte P2, welche weiter anhand der Figur 8 erläutert werden kann. Wenn der Tastkopf weiterhin in x-Richtung verfahren wird, schwenkt das Tastelement 2 um eine Gerade s, auf der die beiden ersten Kontaktpunkte P1 liegen, bis der in der Figur 8 linke Arm 2.11 den Ringkörper 9 am zweiten Kontaktpunkt P2 berührt und somit die Anschlagposition erreicht ist. Dadurch, dass der Abstand d zwischen den ersten Kontaktpunkten P1 und der Längsachse A kleiner ist als der Abstand D zwischen dem zweiten Kontaktpunkt P2 und der Längsachse A entsteht eine abstützende Berührung des Tastelements gegenüber dem Ringkörper 9.

Eine sichere Funktionsweise des Tastkopfes ist gegeben, wenn der zweite Kontaktpunkt P2 auf einer Teilfläche M' einer Mantelfläche M liegt. Die Mantelfläche M ist einem Zylinder zuzuordnen mit dem Radius des zweiten Abstands D und mit der Längsachse A (in der Draufsicht der Figur 8 entspricht diesem Zylinder die gestrichelte Kreislinie mit dem Radius D). Weiterhin wird die Teilfläche M' durch eine Ebene E begrenzt, welche parallel zur Längsachse A ausgerichtet ist und auf der die Gerade s zu liegen kommt. Zur Festlegung der Teilfläche M' sei noch angemerkt, dass die Teilfläche M' die kleinere der beiden durchschnittenen Mantelteilflächen ist, dass also der zur Teilfläche M' zugehörige Zentriwinkel ϕ kleiner als 180° ist.

Bei fortwährender Bewegung des Tastkopfes in x-Richtung wird das Tastelement 2 also zunächst um die Achse s geschwenkt, sobald der zweite Kontaktpunkt P2 den Ringkörper 9 berührt, geht diese Bewegung in eine Schwenkbewegung um den zweiten Kontaktpunkt P2 über. Bei weiterer Bewegung des Tastkopfes in x-Richtung wird schließlich die Sollbruchstelle im Taststift 2.2 versagen. Dadurch wird eine übermäßige Belastung des Tastelements 2 und des Ringkörpers 9 im Bereich des zweiten Kontaktpunkt P2 vermieden.

Im vorgestellten Ausführungsbeispiel ist im Übrigen die abstützende Berührung zum Schutz der Sensoren 5 unabhängig von der Antast- bzw. Verfahrrichtung des Tastkopfes gegeben.

Wenn der Tastkopf aus der Anschlagposition heraus gefahren wird, kehrt das Tastelement 2 wieder in die Ruheposition zurück. Dadurch, dass im vorgestellten Ausführungsbeispiel als Übertragungsmittel Kugeln 4 verwendet werden, ist eine optimale relative Beweglichkeit des Tastelements 2 gegenüber dem Ringkörper 9 bzw. dem Gehäuse 1 gegeben. Durch das Halterungselement 3 ist sichergestellt, dass die Kugeln 4 jeweils reproduzierbar am richtigen Punkt auf der Oberfläche 5.1 der Sensoren 5 lagern, wenn das Tastelement 2 aus der Anschlagposition in die Ruheposition zurückkehrt. Die Kugeln 4 bleiben mit Hilfe des Halterungselements 3 relativ zu den Sensoren 5 unverändert positioniert. Darüber hinaus lagern die drei Arme 2.11 wieder exakt auf den Kugeln 4, wobei die Krümmung der Kugeln 4 eine ausrichtende bzw. zentrierende Wirkung auf das Tastelement 2 bewirken, sobald das Tastelement 2, bzw. der Stifthalter 2.1 wieder in seine Ruheposition zurückkehrt.

## Patentansprüche

1. Tastkopf umfassend
ein fest stehendes Bauteil (9),
Sensoren (5) mit jeweils einer druckempfindlichen Oberfläche (5.1), wobei durch die Sensoren (5) bei Einwirken von Druckkräften (F), die eine Richtungskomponente orthogonal zur druckempfindlichen Oberfläche (5.1) aufweisen, elektrische Signale erzeugbar sind, und die Sensoren (5) relativ zum fest stehenden Bauteil (9) ortsfest sind,
ein Tastelement (2), welches relativ zum fest stehenden Bauteil (9) auslenkbar ist, wobei das Tastelement (2) eine Längsachse (A), einen ersten Kontaktpunkt (P1) und einen zweiten Kontaktpunkt (P2) aufweist, wobei
durch Berühren des Tastelements (2) Druckkräfte (F) über den ersten Kontaktpunkt (P1) des Tastelements (2) in die Sensoren (5) einleitbar sind, so dass eine Pegeländerung des elektrischen Signals von zumindest einem der Sensoren (5) erzeugbar ist, und
bei weiterer Auslenkung des Tastelements (2) dieses in eine Anschlagposition überführbar ist, in welcher der zweite Kontaktpunkt (P2) des Tastelements (2) das fest stehende Bauteil (9) abstützend berührt, wobei
das Tastelement (2) derart ausgestaltet ist, dass in der Anschlagposition die in die Sensoren (5) einleitbaren Druckkräfte (F) begrenzt sind, wobei ein erster Abstand (d) zwischen dem ersten Kontaktpunkt (P1) und der Längsachse (A) kleiner ist als ein zweiter Abstand (D) zwischen dem zweiten Kontaktpunkt (P2) und der Längsachse (A) und wobei das Tastelement (2) mehrere Arme (2.11) aufweist und an jedem der Arme (2.11) sowohl ein erster Kontaktpunkt (P1) als auch ein zweiter Kontaktpunkt (P2) vorgesehen sind.

2. Tastkopf gemäß dem Anspruch 1, wobei der erste Kontaktpunkt (P1) des Tastelements (2) in einer Ruheposition in Kontakt mit einem Übertragungselement (4) ist, welches wiederum die druckempfindliche Oberfläche (5. 1) eines der Sensoren (5) berührt.

3. Tastkopf gemäß dem Anspruch 2, mit einem Halterungselement (3) zur Positionierung der Übertragungselemente (4) bezüglich der Sensoren (5), welches relativ zu den Sensoren (5) ortsfest festgelegt ist.

4. Tastkopf gemäß einem der vorhergehenden Ansprüche, wobei der zweite Kontaktpunkt (P2) an einem Absatz (2.112) des Tastelements (2) angeordnet ist.

5. Tastkopf gemäß einem der Ansprüche 2 oder 3, wobei das Übertragungselement (4) als Kugel ausgestaltet ist.

6. Tastkopf gemäß einem der Ansprüche 2, 3 oder 5, mit einem Halterungselement (3) zur Positionierung der Übertragungselemente (4) bezüglich der Sensoren (5), welches relativ zu den Sensoren (5) ortsfest festgelegt ist.

7. Tastkopf gemäß einem der vorhergehenden Ansprüche, wobei die Sensoren (5) auf einer Leiterplatte (7) montiert sind.

8. Tastkopf gemäß einem der vorhergehenden Ansprüche, wobei die Sensoren (5) piezoresistive Siliziumchips umfassen.

9. Tastkopf gemäß einem der vorhergehenden Ansprüche, wobei der erste Kontaktpunkt (P1) und der zweite Kontaktpunkt (P2) bezogen auf die Längsachse (A) des Tastelements (2) axial versetzt angeordnet sind.

10. Tastkopf gemäß dem Anspruch 9, wobei das Tastelement (2) einen Taststift (2.2) umfasst und der zweite Kontaktpunkt (P2) vom Taststiftende weiter beabstandet ist als der erste Kontaktpunkt (P1).

## Claims

1. A probe comprising
- a stationary component (9),
- sensors (5) comprising in each case a pressure-sensitive surface (5.1), wherein electric signals can be generated by means of the sensors (5) in response to an impact of compressive forces (F), which encompass a directional component in orthogonal direction to the pressure-sensitive surface (5.1) and wherein the sensors (5) are fixed relative to the stationary component (9),
- a probe element (2), which can be moved relative to the stationary component (9), wherein the probe element (2) encompasses a longitudinal axis (A), a first contact point (P1) and a second contact point (P2), wherein
compressive forces (F) can be introduced into the sensors (5) via the first contact point (P1) of the probe element (2) by touching the probe element (2) so that a change of the level of the electric signal can be generated by at least one of the sensors (5) and
the probe element (2) can be transferred into a stop position in response to a further movement of the probe element (2), the second contact point (P2) of the probe element (2) thereby touches the stationary component (9) in said stop position so as to support said probe element (2), wherein
the probe element (2) is embodied in such a manner that the compressive forces (F), which can be introduced into the sensors (5), are limited in the stop position, wherein a first distance (d) between the first contact point (P1) and the longitudinal axis (A) is smaller than a second distance (D) between the second contact point (P2) and the longitudinal axis (A) and wherein the probe element (2) encompasses a plurality of arms (2.11) and wherein provision is made on each of the arms (2.11) for a first contact point (P1) as well as a for a second contact point (P2).

2. The probe according to claim 1, wherein the first contact point (P1) of the probe element (2), when in a resting position, is in contact with a transfer element (4), which in turn touches the pressure-sensitive surface (5.1) of one of the sensors (5).

3. The probe according to claim 2 comprising a fastening element (3) for positioning the transfer elements (4) with reference to the sensors (5), said fastening element being fixed so as to be stationary relative to the sensors (5).

4. The probe according to one of the preceding claims, wherein the second contact point (P2) is arranged on a ledge (2.112) of the probe element (2).

5. The probe according to one of claims 2 or 3, wherein the transfer element (4) is embodied as a sphere.

6. The probe according to one of claims 2, 3 or 5 comprising a fastening element (3) for positioning the transfer elements (4) with reference to the sensors (5), said fastening element (3) being fixed so as to be stationary relative to the sensors (5).

7. The probe according to one of the preceding claims, wherein the sensors (5) are assembled on a printed circuit board (7).

8. The probe according to one of the preceding claims, wherein the sensors (5) comprise piezo-resistive silicon chips.

9. The probe according to one of the preceding claims, wherein the first contact point (P1) and the second contact point (P2) are arranged so as to be axially offset with reference to the longitudinal axis (A) of the probe element (2).

10. The probe according to claim 9, wherein the probe element (2) comprises a tracer pin (2.2) and the second contact point (P2) is spaced apart further away from the end of the tracer pin than the first contact point (P1).

## Revendications

1. Palpeur comprenant
- un élément (9) stationnaire,
- des détecteur (5) possédant chacun une surface (5.1) sensible à la pression, les détecteurs (5) permettant de produire des signaux électriques, sous l'effet de forces de pression (F) présentant une composante en direction orthogonale à la surface (5.1) sensible à la pression, et les détecteurs (5) étant fixes par rapport à l'élément stationnaire (9),
- un élément palpeur (2) pouvant être dévié par rapport à l'élément stationnaire (9), l'élément palpeur (2) comportant un axe longitudinal (A), un premier point de contact (P1) et un deuxième point de contact (P2), dans lequel
des forces de pression (F) peuvent être introduites dans les détecteurs (5), par un contact avec l'élément palpeur (2), par le premier point de contact (P1) de l'élément palpeur (2), de sorte qu'une modification de niveau du signal électrique peut être produite par au moins l'un des détecteurs (5), et
lors d'une déviation supplémentaire de l'élément palpeur (2), celui-ci peut être mis dans une position de butée, dans laquelle le deuxième point de contact (P2) de l'élément palpeur (2) touche l'élément stationnaire (9) par appui,
l'élément palpeur (2) étant conçu de telle manière, que dans la position de butée, les forces de pression (F) qui peuvent être introduites dans les détecteurs (5) sont limitées, un premier écart (d) entre le premier point de contact (P1) et l'axe longitudinal (A) est inférieur à un deuxième écart (D) entre le deuxième point de contact (P2) et l'axe longitudinal (A), et l'élément palpeur (2) comportant plusieurs bras (2.11), et un premier point de contact (P1) ainsi qu'un deuxième point de contact (P2) étant prévus sur chacun des bras (2.11).

2. Palpeur selon la revendication 1, dans lequel le premier point de contact (P1) de l'élément palpeur (2) est en contact avec un élément de transmission (4) lorsqu'il se trouve en position de repos, lequel touche quant à lui la surface (5.1) sensible à la pression de l'un des détecteurs (5).

3. Palpeur selon la revendication 2, avec un élément de maintien (3) pour le positionnement des éléments de transmission (4) par rapport aux détecteurs (5), lequel est fixé de façon stationnaire par rapport aux détecteurs (5).

4. Palpeur selon l'une des revendications précédentes, dans lequel le deuxième point de contact (P2) (P2) se trouve sur un talon (2.112) de l'élément palpeur (2).

5. Palpeur selon l'une des revendications 2 ou 3, dans lequel l'élément de transmission (4) est conçu comme une boule.

6. Palpeur selon l'une des revendications 2, 3 ou 5, avec un élément de maintien (3) pour le positionnement des éléments de transmission (4) par rapport aux détecteurs (5), lequel est fixé de façon stationnaire par rapport aux détecteurs (5).

7. Palpeur selon l'une des revendications précédentes, dans lequel les détecteurs (5) sont montés sur une plaque à circuits imprimés (7).

8. Palpeur selon l'une des revendications précédentes, dans lequel les détecteurs (5) comprennent des puces en silicium piézorésistives.

9. Palpeur selon l'une des revendications précédentes, dans lequel le premier point de contact (P1) et le deuxième point de contact (P2) sont axialement décalés par rapport à l'axe longitudinal (A) de l'élément palpeur (2).

10. Palpeur selon la revendication 9, dans lequel l'élément palpeur (2) comprend un doigt palpeur (2.2) et le deuxième point de contact (P2) est plus éloigné de l'extrémité du doigt palpeur que le premier point de contact (P1).
